# EUROPEAN PATENT SPECIFICATION

(11) **EP 2 514 701 B1**
(45) Date of publication and mention of the grant of the patent: **18.08.2021**
(21) Application number: 09852267.5
(22) Date of filing: 15.12.2009
(51) Int. Cl.: B66B 3/00, B66B 11/02, G09G 5/00, G09G 5/391, H04N 7/01, G06F 3/147

(54) **DISPLAY CONTROL DEVICE FOR AN ELEVATOR**
ANZEIGESTEUERUNGSVORRICHTUNG FÜR EINEN AUFZUG
DISPOSITIF DE COMMANDE D'AFFICHAGE POUR UN ASCENSEUR

(43) Date of publication of application: 24.10.2012
(73) Proprietor: Mitsubishi Electric Corporation, Tokyo 100-8310 (JP)
(72) Inventor: NAGATA, Ayako, Tokyo 100-8310 (JP); MARUYAMA, Kiyoyasu, Tokyo 100-8310 (JP); HATTORI, Tomonori, Tokyo 100-8310 (JP)
(74) Representative: Hoffmann Eitle
(86) International application number: PCT/JP2009/070903
(87) International publication number: WO 2011/074073

(56) References cited:
- EP-A1- 2 093 181
- JP-A- 9 009 171
- JP-A- 9 009 171
- JP-A- 2005 119 842
- JP-A- 2008 143 684
- JP-A- 2008 143 684
- JP-A- 2008 216 343
- JP-A- 2008 216 343
- JP-A- 2008 289 091
- JP-A- 2008 289 091
- US-A1- 2003 058 229
- US-A1- 2008 007 655

## Description

### Technical Field

The present invention relates to an indication control device of an elevator which causes a monitor provided in a hall or car of the elevator to display images.

### Background Art

In recent years, on a monitor provided in each hall and car of an elevator, various kinds of images have been indicated, for example, an elevator information image such as car position and operation direction, a broadcast image, a DVD image and a security camera image according to motions of the elevator. The indication of these images enables a wide variety of information to be supplied. As a result of this, comfortable environments are given to the users of elevators.

In general, these images are transmitted to a monitor by TV signals. And the effective part and invalid part of an image are judged by visually confirming a monitor which performs an indication based on TV signals inputted from various kinds of image input devices. On the basis of this determination the size of the indication of the image and the indication position are manually adjusted.

In contrast to this, in TV devices which indicate TV signals, there have been established techniques for automatically discriminating between the effective part and invalid part of an image (black zone indications which are vertically added and the like) and preventing the invalid part from being indicated (refer to Patent Literature 1 and Patent Literature 2, for example). In this respect, patent applications JP2008143684A and EP2093181A1 disclose examples of elevator systems provided with internal closed circuit TV that allows to show on a screen, depending on an operative state of the elevator system, different images and information from a plurality of different input sources.

### Citation List

### Patent Literature

Patent Literature 1: Japanese Patent Laid-Open No. 7-162751
Patent Literature 2: Japanese Patent Laid-Open No. 2006-229781

### Summary of Invention

### Technical Problem

However, in the application of the automatic discrimination function of the above-described TV device to an indication control device of an elevator, when an elevator information screen on which floor names and directional lamps are indicated in blank against a black background is to be indicated, even the black part to be indicated as the background is determined to be the invalid part, posing a problem.

The present invention was made to solve the problem described above, and the object of the invention is to provide an indication control device of an elevator which is capable of preventing wrong adjustments of a screen while saving the time and manpower of screen adjustment of a monitor in causing various images to be indicated on the monitor provided in a hall or car of an elevator according to motions of the elevator. Means for Solving the Problems

An indication control device of an elevator of the present invention includes at least all features of claim 1. Advantageous Effects of Invention

According to the present invention, in causing various images to be indicated on a monitor provided in a hall or car of an elevator according to motions of the elevator, it is possible to prevent wrong adjustments of a screen while saving the time and manpower of screen adjustment of the monitor.

### Brief Description of the Drawings

Figure 1 is a block diagram showing the main part of an elevator in which the indication control device of an elevator in Embodiment 1 of the present invention is used.
Figure 2 is a diagram to explain a method of adjusting the screen of the monitor by the indication control device of an elevator in Embodiment 1 of the present invention.
Figure 3 is a flowchart to explain the motions of the screen adjusting section of the indication control device of an elevator in Embodiment 1 of the present invention.
Figure 4 is a flowchart to explain a series of motions of the indication control device of an elevator in Embodiment 1 of the present invention.
Figure 5 is a diagram to explain a method of adjusting the screen of a monitor by the indication control device of an elevator in Embodiment 2 of this invention.
Figure 6 is a flowchart to explain the motions of the screen adjusting section of the indication control device of an elevator in Embodiment 2 of the present invention.
Figure 7 is a block diagram showing the main part of an elevator in which the indication control device of an elevator in Embodiment 3 of the present invention is used.
Figure 8 is a flowchart to explain a series of motions of the indication control device of an elevator in Embodiment 3 of the present invention.

### Description of Embodiments

Embodiments of the present invention will be described in accordance with the accompanying drawings. Note that, in each of the drawings, like numerals refer to like or corresponding parts and overlaps of description of these parts are appropriately simplified or omitted.

### Embodiment 1

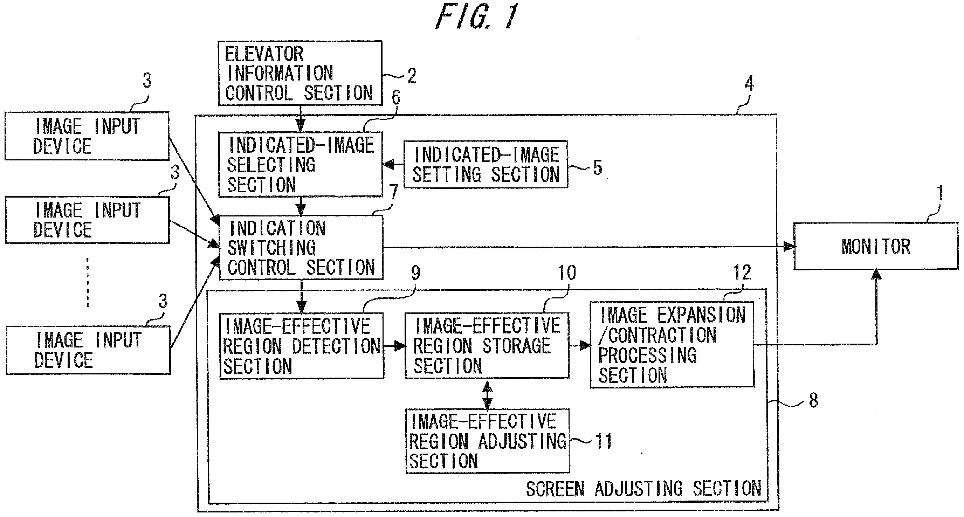

Figure 1 is a block diagram showing the main part of an elevator in which the indication control device of an elevator in Embodiment 1 of the present invention is used.

In Figure 1, reference numeral 1 denotes a monitor. This monitor 1 is provided in the hall or car of an elevator installed in a high-rise building and the like. This monitor 1 has the function of causing images to be indicated in an indication region.

Reference numeral 2 denotes an elevator information control section. This elevator information control section 2 is provided in a control panel which controls the elevator. This elevator information control section 2 has the function of controlling the motions of the elevator, such as the car position, operation direction and the like of the elevator. Reference numeral 3 denotes a plurality of image input devices. These image input devices 3 have the function of obtaining various kinds of images such as a TV broadcast image, a DVD image and a security camera image.

Reference numeral 4 denotes an indication control device. This indication control device 4 has the function of enabling the information on the motions of the elevator inputted from the elevator information control section 2 to be inputted. And the indication control device 4 has the function of selecting a specific image from the images inputted from the plurality of image input devices 3 according to the motions of the elevator and causing this image to be indicated on the monitor 1. The indication control device 4 will be described in more detail below.

The indication control device 4 is provided with an indicated-image setting section 5, an indicated-image selecting section 6, an indication switching control section 7 and a screen adjusting section 8. The indicated-image setting section 5 has the function of enabling the kinds of elevator motions and the kinds of images indicated on the monitor 1 to be set in a correlated manner. And the indicated-image setting section 5 has the function of enabling the necessity of a screen adjustment to be set when images are indicated on the monitor 1 for each kind.

The indicated-image selecting section 6 has the function of enabling information on the motions of the elevator to be inputted from the elevator information control section 2. Also, the indicated-image selecting section 6 has the function of detecting information on the kinds of images correlated to the inputted motions of the elevator and information on the necessity of a screen adjustment from the indicated-image setting section 5.

The indication switching control section 7 has the function of enabling image signals to be inputted from the plurality of image input devices 3. Also, the indication switching control section 7 has the function of enabling the information on the kinds of images and the information on the necessity of a screen adjustment detected by the indicated-image selecting section 6 to be inputted. Furthermore, the indication switching control section 7 has the function of selecting a specific image from the images inputted from the plurality of image input devices 3 on the basis of the information on the kinds of images detected by the indicated-image selecting section 6, and causing the monitor 1 to be indicated this selected specific image.

The screen adjusting section 8 is provided with an image-effective region detection section 9, an image-effective region storage section 10, an image-effective region adjusting section 11 and an image expansion/contraction processing section 12. The image-effective region detection section 9 has the function of enabling an image signal selected by the indication switching control section 7 and the information on the necessity of a screen adjustment corresponding to the image in question to be inputted. Also, the image-effective region detection section 9 has the function of detecting the image-effective region of an inputted image. The image-effective region storage section 10 has the function of storing an image-effective region detected by the image-effective region detection section 9 and the information on the necessity of a screen adjustment.

The image-effective region adjusting section 11 has the function of calculating the aspect ratio of the image-effective region stored in the image-effective region storage section 10. Also, the image-effective region adjusting section 11 has the function of making the aspect ratio of the image-effective region equal to the aspect ratio of the indication region of the monitor 1 when the aspect ratio of the image-effective region is different from the aspect ratio of the indication region of the monitor 1. Furthermore, the image-effective region adjusting section 11 has the function of overwriting the image-effective region after adjustment on the image-effective region storage section 10. The image expansion/contraction processing section 12 has the function of adjusting the size of the image-effective region stored in the image-effective region storage section 10 to the size of the indication region of the monitor 1 when information indicating that screen adjustment is necessary is stored in the image-effective region storage section 10.

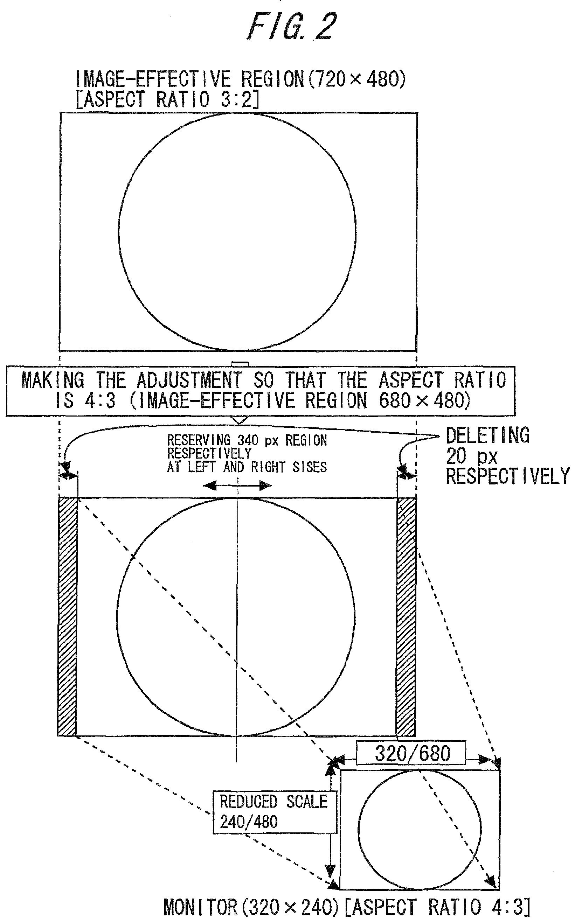

Next, with the aid of Figure 2 a more detailed description will be given of a method of adjusting the screen of the monitor 1 in the screen adjusting section 8.

Figure 2 is a diagram to explain a method of adjusting the screen of the monitor by the indication control device of an elevator in Embodiment 1 of the present invention.

As an example, consideration is given to the case where the size of the image-effective region detected by the image-effective region detection section 9 is 720 px * 480 px and the size of the indication region of the monitor 1 is 320 px * 240 px.

In this case, the aspect ratio of the image-effective region is 3:2. On the other hand, the aspect ratio of the indication region of the monitor 1 is 4:3. Specifically, the image-effective region is relatively long in the horizontal direction with respect to the monitor 1. In this case, for the image-effective region, the aspect ratio is adjusted by the image-effective region adjusting section 11, with the vertical direction serving as a standard. That is, the adjustment is made so that the horizontal direction of the image-effective region becomes 680 px. Specifically, both left and right sides of the image-effective region are deleted by 20 px in such a manner that the center of the image-effective region is maintained. As a result of this, the aspect ratio of the image-effective region becomes equal to the aspect ratio of the indication region of the monitor 1.

However, if nothing is done, the image-effective region after adjustment is larger than the indication region of the monitor 1. Therefore, adjustment is made by the image expansion/contraction processing section 12 so that the size of the image-effective region after adjustment becomes the same as the size of the indication region of the monitor 1. Specifically, the horizontal direction and vertical direction of the image-effective region after adjustment are scaled down at the same ratio. As a result of this, the image is indicated on the monitor 1 correctly without becoming thinner or spreading.

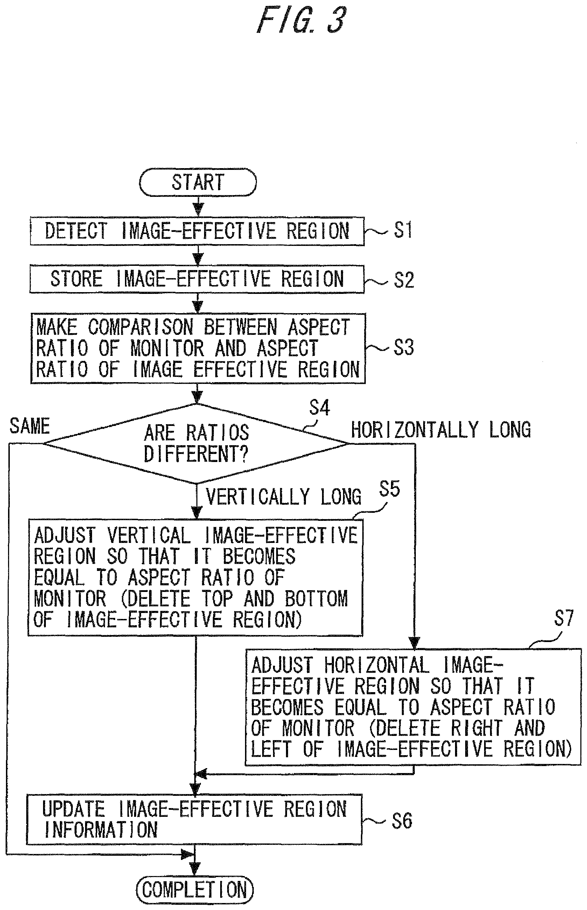

Next, with the aid of Figure 3, a more detailed description will be given of the motions of the screen adjusting section 8.

Figure 3 is a flowchart to explain the motions of the screen adjusting section of the indication control device of an elevator in Embodiment 1 of the present invention.

First, in Step S1 an image-effective region is detected by the image-effective region detection section 9 and the flow of processing proceeds to Step S2.

In Step S2, the detected image-effective region is stored by the image-effective region storage section 10, and the flow of processing proceeds to Step S3. In Step S3, a comparison is made between the aspect ratio of the indication region of the monitor 1 and the aspect ratio of the image-effective region by the image-effective region adjusting section 11, and the flow of processing proceeds to Step S4. In Step S4, a determination is made by the image-effective region adjusting section 11 as to whether or not the aspect ratios of the two are different from each other. When both have the same aspect ratio, the motion is finished.

In contrast to this, when the aspect ratio of the image-effective region is vertically longer than the aspect ratio of the indication region of the monitor 1, the flow of processing proceeds to Step S5. In Step S5, the vertical image-effective region is adjusted by the image-effective region adjusting section 11 so that the aspect ratio of the image-effective region becomes equal to the aspect ratio of the indication region of the monitor 1. Specifically, the top and bottom of the image-effective region are deleted. After that, the flow of processing proceeds to Step S6, and the image-effective region stored in the image-effective region storage section 10 is updated by the image-effective region adjusting section 11 and the motion is finished.

On the other hand, when in Step S4 the aspect ratio of the image-effective region is horizontally longer than the aspect ratio of the indication region of the monitor 1, the flow of processing proceeds to Step S7. In Step S7, the horizontal image-effective region is adjusted by the image-effective region adjusting section 11 so that the aspect ratio of the image-effective region becomes equal to the aspect ratio of the indication region of the monitor 1. Specifically, the left and right of the image-effective region are deleted. After that, the flow of processing proceeds to Step S6, and the image-effective region stored in the image-effective region storage section 10 is updated by the image-effective region adjusting section 11 and the motion is finished.

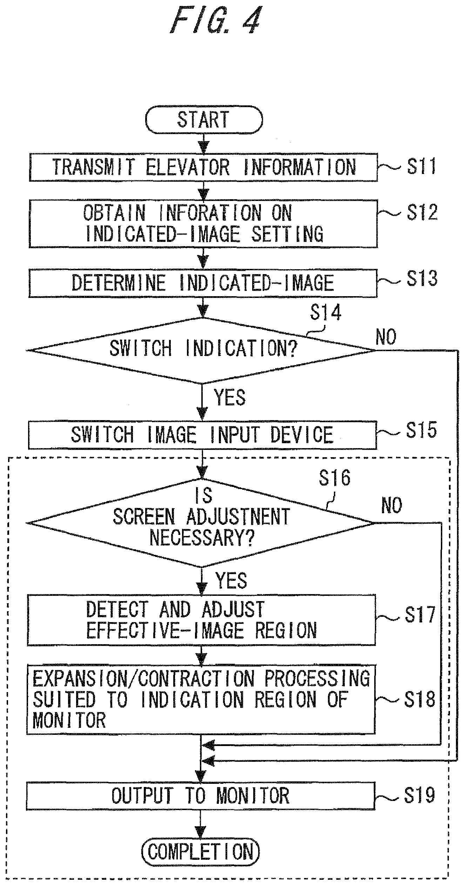

Next, a series of motions of the indication control device 4 will be described with the aid of Figure 4.

Figure 4 is a flowchart to explain a series of motions of the indication control device of an elevator in Embodiment 1 of the present invention.

First, in Step S11, elevator information is transmitted by the elevator information control section 2 and the flow of processing proceeds to Step S12. In Step S12, the information on the setting of an image to be indicated on the monitor 1 is obtained by the indicated-image selecting section 6 and the flow of processing proceeds to Step S13.

In Step S13, an image to be indicated on the monitor 1 is determined by the indicated-image selecting section 6 and the flow of processing proceeds to Step S14. In Step S14, a determination is made by the indication switching control section 7 as to whether or not the image to be indicated on the monitor 1 is to be switched. When the image is switched, the flow of processing proceeds to Step S15. In Step S15, the indication is switched by the indication switching control section 7 so that an image signal from the image input device 3 corresponding to the determined image is outputted to the monitor 1 and the flow of processing proceeds to Step S16. In Step S16, a determination is made by the image-effective region detection section 9 as to the necessity of a screen adjustment for the selected image.

When a screen adjustment is necessary, the flow of processing proceeds to Step S17. In Step S17, after the detection of the image-effective region by the image-effective region detection section 9, an adjustment of the image-effective region is made by the image-effective adjusting section 11 and the flow of processing proceeds to Step S18. In Step S18, expansion/contraction processing to make the size of the image-effective region after adjustment equal to the size of the indication region of the monitor 1 is performed by the image expansion/contraction processing section 12 and the flow of processing proceeds to Step S19. In Step S19, the image after expansion/contraction processing is outputted to the monitor 1 by the image expansion/contraction processing section 12.

In contrast to this, when a screen adjustment is unnecessary in Step S16, the flow of processing proceeds to Step S19 without going through Steps S17 and S18. That is, in this case, neither the detection and adjustment of the image-effective region nor the expansion/contraction processing suited to the indication region of the monitor 1 is performed, and the image outputted by the indication switching control section 7 is outputted to the monitor 1 as it is. Note that, when the image is not switched in Step S14, in Step S19 the present image is outputted to the monitor 1.

According to Embodiment 1 described above, a determination is made as to the necessity of a screen adjustment for the image selected by the indication switching control section 7 and indicated on the monitor 1 on the basis of the conditions set beforehand for each of a plurality of images. For this reason, it is possible to prevent wrong adjustments, for example, the case where even the black part which is to be indicated as the background is determined to be an invalid part. That is, in indicating various images on the monitor 1 according to the motions of an elevator, it is possible to prevent wrong adjustments of the screen while saving the time and manpower of screen adjustment of the monitor 1.

And it becomes unnecessary to store the screen adjustment results for each of the image input devices 3 as parameters. For this reason, this leads to the saving of memory. Furthermore, because it becomes possible to carry out flexible setting by saving the time and manpower of screen adjustment, it is possible to easily change the image input devices 3 and the indication contents.

Furthermore, when the aspect ratio of the image-effective region and the aspect ratio of the indication region of the monitor 1 are different from each other, the edge portion of the image-effective region is deleted and adjustment is made so that the aspect ratio of the image-effective region and the aspect ratio of the indication region of the monitor 1 are equal to each other. For this reason, it is possible to cause right images which do not_become thinner or spread to be indicated on the monitor 1.

Note that, in this embodiment, the configuration is such that a determination is made as to the necessity of a screen adjustment related to an image-effective region of an image selected by the indication switching control section 7 and the necessity of a screen adjustment which involves making an image selected by the indication switching control section 7 equal to the size of an indication region of the monitor 1. However, the configuration may also be such that a determination is made as to at least either the necessity of a screen adjustment related to an image-effective region of an image selected by the indication switching control section 7 or the necessity of a screen adjustment which involves making an image selected by the indication switching control section 7 equal to the size of an indication region of the monitor 1.

### Embodiment 2

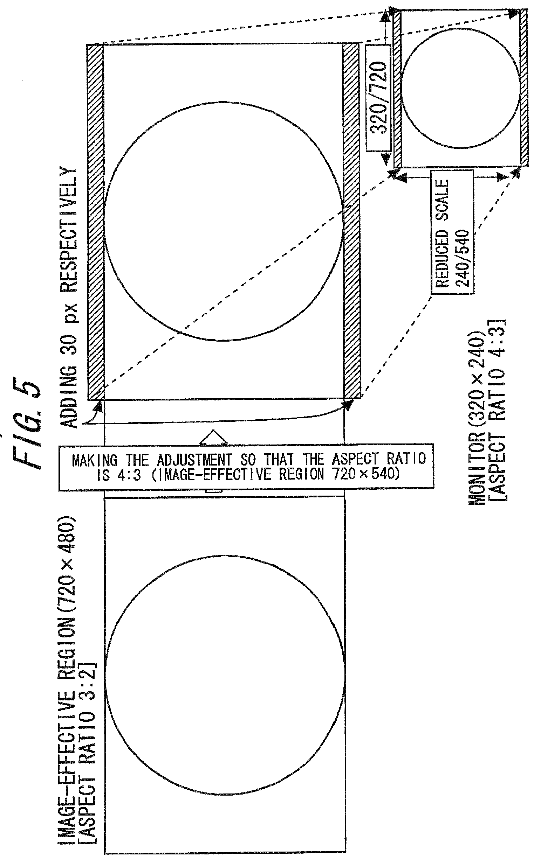

Figure 5 is a diagram to explain a method of adjusting the screen of a monitor by the indication control device of an elevator in Embodiment 2 of this invention. Note that, parts which are the same as in Embodiment 1 or corresponding parts bear like numerals and descriptions of these parts are omitted.

In Embodiment 1, the aspect ratio of the image-effective region is made equal to the aspect ratio of the monitor 1 by deleting the edge portion of the image-effective region. On the other hand, in Embodiment 2, a band is added to the edge portion of the image-effective region, whereby the aspect ratio of the image-effective region is made equal to the aspect ratio of the monitor 1.

As an example, as shown in Figure 5, consideration is given to the case where the size of the image-effective region detected by the image-effective region detection section 9 is 720 px * 480 px and the size of the indication region of the monitor 1 is 320 px * 240 px. In this case, the aspect ratio of the image-effective region is 3:2. On the other hand, the aspect ratio of the indication region of the monitor 1 is 4:3. Specifically, the image-effective region is relatively long in the vertical direction with respect to the monitor 1.

In this case, for the image-effective region, the aspect ratio is adjusted by image-effective region adjusting section 11, with the horizontal direction serving as a standard. That is, the adjustment is made so that the vertical direction of the image-effective region obtains 540 px. Specifically, a band of 30 px is added to both top and bottom sides of the image-effective region. As a result of this, the aspect ratio of the image-effective region becomes equal to the aspect ratio of the indication region of the monitor 1.

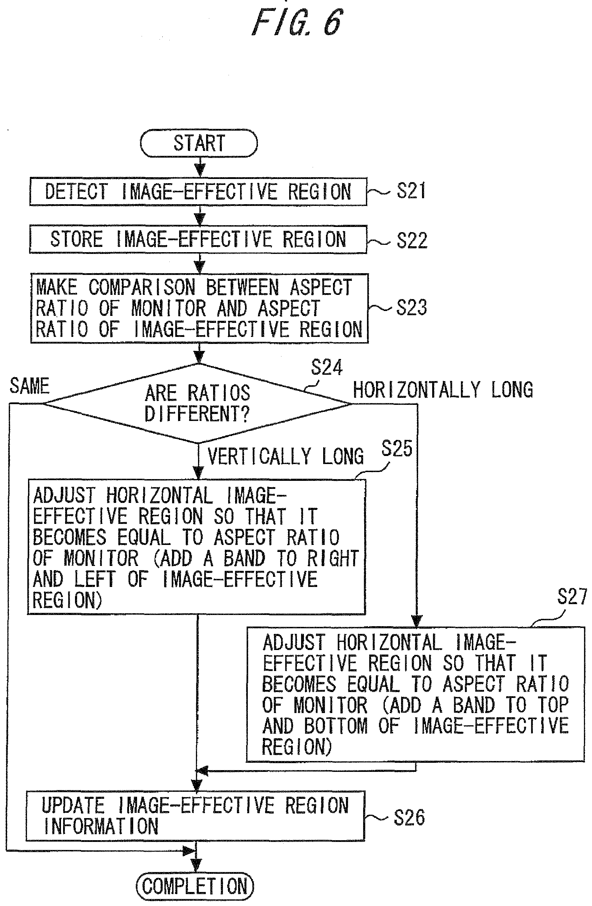

Next, the motions of the screen adjusting section 8 will be described in more detail with the aid of Figure 6.

Figure 6 is a flowchart to explain the motions of the screen adjusting section of the indication control device of an elevator in Embodiment 2 of the present invention.

First, in Step S21, the image-effective region is detected by the image-effective region detection section 9 and the flow of processing proceeds to Step S22.

In Step S22, the detected image-effective region is stored by the image-effective region storage section 10, and the flow of processing proceeds to Step S23. In Step S23, a comparison is made between the aspect ratio of the indication region of the monitor 1 and the aspect ratio of the image-effective region by the image-effective region adjusting section 11, and the flow of processing proceeds to Step S24. In Step S24, a determination is made by the image-effective region adjusting section 11 as to whether or not the aspect ratios of the two are different from each other. When both have the same aspect ratio, the motion is finished.

In contrast to this, when the aspect ratio of the image-effective region is vertically longer than the aspect ratio of the indication region of the monitor 1, the flow of processing proceeds to Step S25. In Step S25, the horizontal image-effective region is adjusted by the image-effective region adjusting section 11 so that the aspect ratio of the image-effective region becomes equal to the aspect ratio of the indication region of the monitor 1. Specifically, a band is added to the right and left of the image-effective region. After that, the flow of processing proceeds to Step S26, and the image-effective region stored in the image-effective region storage section 10 is updated by the image-effective region adjusting section 11 and the motion is finished,

On the other hand, when in Step 24 the aspect ratio of the image-effective region is horizontally longer than the aspect ratio of the indication region of the monitor 1, the flow of processing proceeds to Step S27. In Step S27, the vertical image-effective region is adjusted by the image-effective region adjusting section 11 so that the aspect ratio of the image-effective region becomes equal to the aspect ratio of the indication region of the monitor 1. Specifically, a band is added to the top and bottom of the image-effective region. After that, the flow of processing proceeds to Step S26, and the image-effective region stored in the image-effective region storage section 10 is updated by the image-effective region adjusting section 11 and the motion is finished.

According to Embodiment 2 described above, when the aspect ratio of the image-effective region and the aspect ratio of the indication region of the monitor 1 are different from each other, a band is added to the edge portion of the image-effective region and adjustment is made so that the aspect ratio of the image-effective region and the aspect ratio of the indication region of the monitor 1 are equal to each other. For this reason, it is possible to cause right images which do not become thinner or spread to be indicated on the monitor 1.

### Embodiment 3

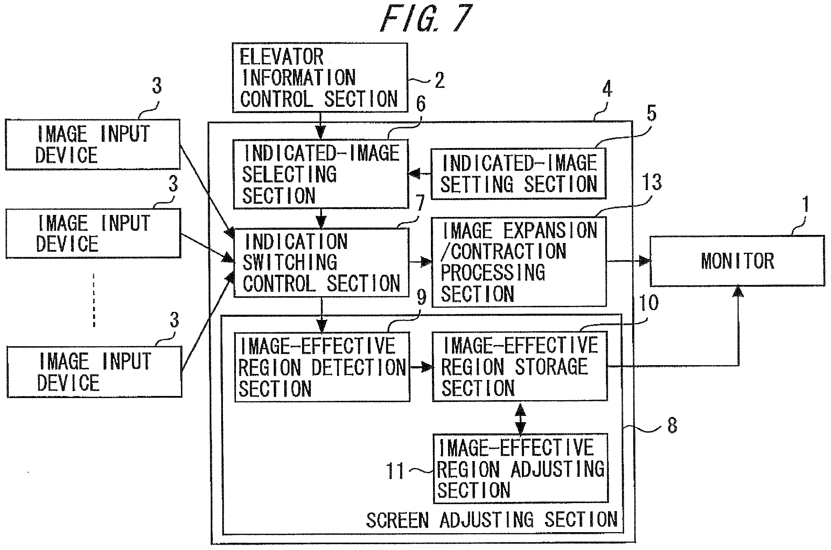

Figure 7 is a block diagram showing the main part of an elevator in which the indication control device of an elevator in Embodiment 3 of the present invention is used. Note that, parts which are the same as in Embodiment 1 or corresponding parts bear like numerals and descriptions of these parts are omitted.

In Embodiment 1, the configuration is such that when a screen adjustment is determined to be unnecessary, an image not subjected to any processing is indicated on the monitor 1. On the other hand, in Embodiment 3 the configuration is such that each time the indication switching control section 7 selects an image, an adjustment is made which involves making an image to which as required an adjustment of the image-effective region is made, suited to the size of the indication region of the monitor 1.

Specifically, as shown in Figure 7, in Embodiment 3, the image expansion/contraction processing section 13 is provided between the image switching control section 7 and the monitor 1 rather than between the screen adjusting section 8 and the monitor 1. It is ensured that this image expansion/contraction processing section 13 makes an adjustment which involves making an image selected by the image switching control section 7 suited to the size of the indication region of the monitor 1.

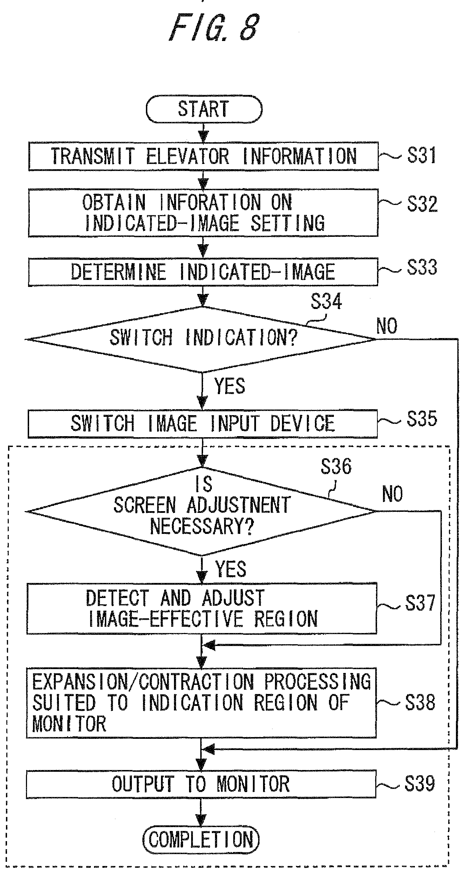

Next, a series of motions of the indication control device 4 will be described with the aid of Figure 8.

Figure 8 is a flowchart to explain a series of motions of the indication control device of an elevator in Embodiment 3 of the present invention.

First, in Step S31, elevator information is transmitted by the elevator information control section 2 and the flow of processing proceeds to Step S32. In Step S32, the information on the setting of an image to be indicated on the monitor 1 is obtained by the indicated-image selecting section 6 and the flow of processing proceeds to Step S33.

In Step S33, an image to be indicated on the monitor 1 is determined by the indicated-image selecting section 6 and the flow of processing proceeds to Step S34. In Step S34, a determination is made by the indication switching control section 7 as to whether or not the image to be indicated on the monitor 1 is to be switched. When the image is switched, the flow of processing proceeds to Step S35. In Step S35, the indication is switched by the indication switching control section 7 so that an image signal from the image input device 3 corresponding to the determined image is outputted to the monitor 1 and the flow of processing proceeds to Step S36. In Step S36, a determination is made by the image-effective region detection section 9 as to the necessity of a screen adjustment for the selected image.

When a screen adjustment is necessary, the flow of processing proceeds to Step S37. In Step S37, after the detection of the image-effective region by the image-effective region detection section 9, an adjustment of the image-effective region is made by the image-effective region adjusting section 11 and the flow of processing proceeds to Step S38. In Step S38, expansion/contraction processing to make the size of the image-effective region after adjustment equal to the size of the indication region of the monitor 1 is performed by the image expansion/contraction processing section 13 and the flow of processing proceeds to Step S39. In Step S39, the image after expansion/contraction processing is outputted to the monitor 1 by the image expansion/contraction processing section 13.

In contrast to this, when a screen adjustment is unnecessary in Step S36, the flow of processing proceeds to Step S38 without going through Step S37. In Step S38, the expansion/contraction processing to make the size of the image-effective region without an adjustment equal to the size of the indication region of the monitor 1 is performed by the image expansion/contraction processing section 13 and the flow of processing proceeds to Step S39. In Step S39, an image after expansion/contraction processing is outputted to the monitor 1 by the image expansion/contraction processing section 13. Note that, when the image is not switched in Step S34, in Step S19 the present image is outputted to the monitor 1.

According to Embodiment 3 described above, each time the indication switching control section 7 selects an image, for an image to which the screen adjusting section 8 has made an adjustment of the image-effective region as required, an adjustment which involves making this image suited to the size of the indication region of the monitor 1 is performed. For this reason, even when the equipment which performs an adjustment of the image-effective region fails, it is possible to indicate an image of an appropriate size on the monitor 1.

Note that, in Embodiments 1 to 3, the configuration is such that a determination as to the necessity of a screen adjustment is made for each of a plurality of images. However, the configuration may also be such that a determination as to the necessity of a screen adjustment is made for each of the plurality of image input devices 3. For example, in the case where a plurality of security cameras A to F are installed, it is possible to adopt a configuration in which a screen adjustment is necessary for the cameras A and B and a screen adjustment is unnecessary for the cameras C to F.

Also, the configuration may be such that a determination as to the necessity of a screen adjustment is made for each motion of the elevator. For example, it is possible to adopt a configuration in which a screen adjustment is necessary during the run of the elevator and a screen adjustment is unnecessary during a stop of the elevator.

Furthermore, the image expansion/contraction processing sections 12, 13 may adjust the size of an image to any size. In particular, if the indication switching control section 7 selects a plurality of images and the screen adjusting section 8 adjusts the size of a plurality of images so that the plurality of images are simultaneously indicated in the indication region of the monitor 1, then it is possible to provide more information simultaneously to the users of the elevator.

### Industrial Applicability

As described above, the indication control device of an elevator of the present invention can be applied to an elevator which causes images to be indicated on a monitor provided in a hall or car of the elevator.

### Description of symbols

1 monitor, 2 elevator information control section,
3 image input device, 4 indication control device,
5 indicated-image setting section, 6 indicated-image selecting section,
7 indication switching control section, 8 screen adjusting section,
9 image-effective region detection section,
10 image-effective region storage section,
11 image-effective region adjusting section,
12,13 image expansion/contraction processing section.

## Claims

1. An indication control device of an elevator, comprising:
an indication switching control section (7) to which information on motions of the elevator is inputted and which switches images indicated on a monitor (1) provided in each hall or car of the elevator by selecting a specific image from a plurality of images inputted from each of a plurality of image input devices according to motions of the elevator; and
a screen adjusting section (8) which makes a determination as to the necessity of a screen adjustment of the monitor for an image which is selected to be displayed on the monitor (1) by the indication switching control section (7), said determination being done on the basis of conditions set beforehand for each of a plurality of images,
wherein the screen adjusting section (8) determines, as the determination as to the necessity of the screen adjustment, at least either the necessity of the screen adjustment related to an image-effective region of an image selected by the indication switching control section (7) or the necessity of the screen adjustment which involves making an image selected by the indication switching control section (7) suited to the size of an indication region of the monitor (1), and
further comprising:
an image expansion/contraction processing section (13) which makes an adjustment which involves making an image for which an adjustment of the image-effective region has been made by the screen adjusting section (8) as required each time the indication switching control section (7) selects an image equal to the size of the indication region of the monitor (1).

2. The indication control device of an elevator according to claim 1, wherein in the case where the aspect ratio of the image-effective region and the aspect ratio of the indication region of the monitor (1) are different from each other, the screen adjusting section (8) makes an adjustment which involves deleting an edge portion of the image-effective region and making the aspect ratio of the image-effective region equal to the aspect ratio of the monitor (1).

3. The indication control device of an elevator according to claim 1, wherein in the case where the aspect ratio of the image-effective region and the aspect ratio of the indication region of the monitor (1) are different from each other, a band is added to the edge portion of the image-effective region, whereby an adjustment is made by making the aspect ratio of the image-effective region equal to the aspect ratio of the monitor (1).

4. The indication control device of an elevator according to claim 1, wherein the indication switching control section (7) selects a plurality of images as images which are to be indicated on the monitor (1), and
wherein in the case where the indication switching control section (7) has selected a plurality of images, the screen adjusting section (8) adjusts the size of a selected plurality of images so that the plurality of images selected by the indication switching control section (7) are simultaneously indicated in the indication region of the monitor (1).

## Patentansprüche

1. Eine Anzeigesteuerungsvorrichtung eines Aufzugs, umfassend:
einen Anzeigeschaltsteuerabschnitt (7), in den Informationen über Bewegungen des Aufzugs eingegeben werden und der Bilder umschaltet, die auf einem Monitor (1) angezeigt werden, der in jeder Halle oder Kabine des Aufzugs vorgesehen ist, indem ein spezifisches Bild aus einer Vielzahl von Bildern ausgewählt wird, die von jeder einer Vielzahl von Bildeingabevorrichtungen entsprechend den Bewegungen des Aufzugs eingegeben werden; und
einen Bildschirmanpassungsabschnitt (8), der eine Bestimmung hinsichtlich der Notwendigkeit einer Bildschirmanpassung des Monitors für ein Bild vornimmt, das ausgewählt wird, um auf dem Monitor (1) durch den Anzeigeumschaltsteuerungsabschnitt (7) angezeigt zu werden, wobei die Bestimmung auf der Grundlage von Bedingungen erfolgt, die im Voraus für jedes einer Vielzahl von Bildern eingestellt werden,
wobei der Bildschirmanpassungsabschnitt (8) als die Bestimmung der Notwendigkeit der Bildschirmanpassung zumindest entweder die Notwendigkeit der Bildschirmanpassung in Bezug auf einen bildwirksamen Bereich eines durch den Anzeigeumschaltsteuerabschnitt (7) ausgewählten Bildes oder die Notwendigkeit der Bildschirmanpassung bestimmt, die ein Anpassen eines durch den Anzeigeumschaltsteuerabschnitt (7) ausgewählten Bildes an die Größe eines Anzeigebereichs des Monitors (1) beinhaltet, und
ferner umfassend:
einen Bild-Expansions/Kontraktions-Verarbeitungsabschnitt (13), der eine Einstellung vornimmt, die beinhaltet, dass ein Bild, für das eine Einstellung des bildwirksamen Bereichs durch den Bildschirm-Einstellabschnitt (8) vorgenommen wurde, jedes Mal, wenn der AnzeigeumschaltSteuerabschnitt (7) ein Bild auswählt, an die Größe des Anzeigebereichs des Monitors (1) angepasst wird, wie erforderlich gemacht wird.

2. Die Anzeigesteuerungsvorrichtung eines Aufzugs nach Anspruch 1, wobei in dem Fall, in dem das Seitenverhältnis des bildwirksamen Bereichs und das Seitenverhältnis des Anzeigebereichs des Monitors (1) voneinander verschieden sind, der Bildschirmeinstellabschnitt (8) eine Einstellung vornimmt, die das Löschen eines Randabschnitts des bildwirksamen Bereichs und das Angleichen des Seitenverhältnisses des bildwirksamen Bereichs an das Seitenverhältnis des Monitors (1) beinhaltet.

3. Die Anzeigesteuerungsvorrichtung eines Aufzugs nach Anspruch 1, wobei in dem Fall, in dem das Seitenverhältnis des bildwirksamen Bereichs und das Seitenverhältnis des Anzeigebereichs des Monitors (1) voneinander verschieden sind, ein Band zu dem Randabschnitt des bildwirksamen Bereichs hinzugefügt wird, wodurch eine Einstellung vorgenommen wird, indem das Seitenverhältnis des bildwirksamen Bereichs gleich dem Seitenverhältnis des Monitors (1) gemacht wird.

4. Die Anzeigesteuerungsvorrichtung eines Aufzugs nach Anspruch 1, wobei der Anzeigeschaltsteuerabschnitt (7) eine Vielzahl von Bildern als Bilder auswählt, die auf dem Monitor (1) angezeigt werden sollen, und
wobei in dem Fall, in dem der Anzeigeschaltsteuerabschnitt (7) eine Mehrzahl von Bildern ausgewählt hat, der Bildschirmeinstellabschnitt (8) die Größe einer ausgewählten Mehrzahl von Bildern einstellt, so dass die Mehrzahl von Bildern, die von dem Anzeigeschaltsteuerabschnitt (7) ausgewählt wurden, gleichzeitig in dem Anzeigebereich des Monitors (1) angezeigt werden.

## Revendications

1. Dispositif de commande d'indication d'un ascenseur, comprenant :
une section de commande de commutation d'indication (7) sur laquelle des informations sur des mouvements de l'ascenseur sont entrées et qui commute des images indiquées sur un moniteur (1) prévu dans chaque hall ou cabine de l'ascenseur en sélectionnant une image spécifique parmi une pluralité d'images entrées à partir de chacun d'une pluralité de dispositifs d'entrée d'image selon des mouvements de l'ascenseur; et
une section d'ajustement d'écran (8) qui effectue une détermination quant à la nécessité d'un ajustement d'écran du moniteur pour une image qui est sélectionnée pour être affichée sur le moniteur (1) par la section de commande de commutation d'indication (7), ladite détermination étant effectuée sur la base de conditions établies au préalable pour chacune d'une pluralité d'images,
dans lequel la section d'ajustement d'écran (8) détermine, en tant que détermination de la nécessité de l'ajustement d'écran, au moins soit la nécessité de l'ajustement d'écran en rapport avec une région effective d'image d'une image sélectionnée par la section de commande de commutation d'indication (7), soit la nécessité de l'ajustement d'écran qui implique de rendre une image sélectionnée par la section de commande de commutation d'indication (7) adaptée à la taille d'une région d'indication du moniteur (1), et
comprenant en outre :
une section de traitement d'expansion/contraction d'image (13) qui effectue un ajustement qui implique de rendre une image, pour laquelle un ajustement de la région effective d'image a été effectué par la section d'ajustement d'écran (8) en cas de besoin chaque fois que la section de commande de commutation d'indication (7) sélectionne une image, égale à la taille de la région d'indication du moniteur (1).

2. Dispositif de commande d'indication d'un ascenseur selon la revendication 1, dans lequel, dans le cas où le rapport d'aspect de la région effective d'image et le rapport d'aspect de la région d'indication du moniteur (1) sont différents l'un de l'autre, la section d'ajustement d'écran (8) effectue un ajustement qui implique de supprimer une partie de bord de la région effective d'image et de rendre le rapport d'aspect de la région effective d'image égal au rapport d'aspect du moniteur (1).

3. Dispositif de commande d'indication d'un ascenseur selon la revendication 1, dans lequel dans le cas où le rapport d'aspect de la région effective d'image et le rapport d'aspect de la région d'indication du moniteur (1) sont différents l'un de l'autre, une bande est ajoutée à la partie de bord de la région effective d'image, moyennant quoi un ajustement est effectué en rendant le rapport d'aspect de la région effective d'image égal au rapport d'aspect du moniteur (1).

4. Dispositif de commande d'indication d'un ascenseur selon la revendication 1, dans lequel la section de commande de commutation d'indication (7) sélectionne une pluralité d'images en tant qu'images qui doivent être indiquées sur le moniteur (1), et
dans lequel dans le cas où la section de commande de commutation d'indication (7) a sélectionné une pluralité d'images, la section d'ajustement d'écran (8) ajuste la taille d'une pluralité sélectionnée d'images de sorte que la pluralité d'images sélectionnées par la section de commande de commutation d'indication (7) sont indiquées simultanément dans la région d'indication du moniteur (1).
